(19) Europäisches Patentamt
European Patent Office
Office européen des brevets

(11) Publication number: **0 068 294**
**B1**

(12) **EUROPEAN PATENT SPECIFICATION**

(45) Date of publication of patent specification: **18.12.85**

(21) Application number: **82105253.7**

(22) Date of filing: **16.06.82**

(51) Int. Cl.$^4$: **A 01 N 57/12,** A 01 N 65/00 // (A01N57/12, 47:22, 57:12, 47:06, 57:12, 43:90, 57:12, 37:52, 57:12, 37:06, 57:12, 33:26, 57:12, 33:22, 57:12, 33:18, 57:12, 31:08, 57:12, 31:04)

(54) **A new acaricidal composition, processes for its production and its use.**

(30) Priority: **27.06.81 DE 3125448**

(43) Date of publication of application: **05.01.83 Bulletin 83/01**

(45) Publication of the grant of the patent: **18.12.85 Bulletin 85/51**

(84) Designated Contracting States: **AT BE CH DE FR GB IT LI LU NL SE**

(56) References cited:
**US-A-1 938 864**
**US-A-2 006 227**
**US-A-4 007 258**

**CENTRAL PATENTS INDEX - BASIC ABSTRACTS JOURNAL, C-AGDOC, week D/50, 10th February 1982, no. 92088 D/50, Derwent Publications Ltd., London (GB);**

**The file contains technical information submitted after the application was filed and not included in this specification**

(73) Proprietor: **A. Nattermann & Cie. GmbH**
**Nattermannallee 1**
**D-5000 Köln 30 (DE)**

(72) Inventor: **Ghyczy, Miklos, Dr. Dipl.-Chem.**
**Am Serviesberg 12**
**D-5000 Köln 41 (DE)**
Inventor: **Osthoff, Heinrich, Dr.**
**Rondorfer Strasse 51**
**D-5030 Hürth (DE)**
Inventor: **Etschenberg, Eugen, Dr. med.**
**Hirseweg 10**
**D-5000 Köln 41 (DE)**

(74) Representative: **Redies, Bernd, Dr. rer. nat.**
**COHAUSZ & FLORACK Patentanwaltsbüro**
**Schumannstrasse 97 Postfach 14 01 47**
**D-4000 Düsseldorf 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 068 294 B1

Courier Press, Leamington Spa, England.

**Description**

This invention relates to an acaricidal composition, to processes for its production and to its use.

Mites and arachnids are not destroyed by the majority of insecticides currently used for plant protection purposes and, because of this, have increased in numbers to an even greater extent in recent years. Accordingly, there is a serious need for selective acaricides.

Numerous chemical acaricides have been used for controlling mites. In many cases, however, they have to be applied in large doses to the infested plants and, as a result, can have toxic effects both on the plant and on the environment.

It has now surprisingly been found that the quantity of acaricides per hectare of cultivated area required for controlling mites can be reduced by up to 40—60% and, in some cases, by up to 80% providing the acaricidally active substance or the mixture of several acaricidally active substances is used together with one or more de-oiled natural phospholipid products soluble in ethanol consisting of 25 to 96% of phosphatidyl choline or 96% of hydrogenated phosphatidyl choline and 25 to 0% of phosphatidyl ethanolamine, 20 to 0% of phosphatidyl inositol and the difference to 100% of one or several of N-acyl phosphatidyl ethanolamines, phosphatidyl serine, phosphatidyl glycerol and lysolecithin in a ratio by weight of a:b from 1:0.5 to 1:10 in addition to standard vehicles, diluents, solvents, propellents and/or other inert auxiliaries.

In addition, the new mixtures show considerably better adhesion to the produce to be protected and, as a result, afford effective protection against mites over a longer period. In addition to an improvement in the economy of treatment, the reduction in the quantity of acaricide used lessens the risk of damage to the plants, for example by reducing the residue remaining in the plant, which also results in a considerable reduction in the waiting time. Finally, most of the phospholipids are natural and, in every case, non-toxic products which, by virtue of their nature and their properties, do not cause any pollution of the environment or have any adverse effect upon the waiting time. Some of the phospholipids are of course even used in foods.

To produce the new acaricidal compositions, the acaricides are mixed with the phospholipids or mixture of phospholipids in a ratio by weight of from 1:0.5 to 1:10 and preferably, in a ratio by weight of from 1:1 to 1:5. The weight of the phospholipid(s) is based on substantially pure phospholipid.

Suitable phospholipids are, for example, the commercially available phosphatidyl cholines or phosphatidyl choline mixtures, such as

| | |
|---|---|
| Phospholipon[R]25 | (25% of phosphatidyl choline,<br>25% of phosphatidyl ethanolamine,<br>20% of phosphatidyl inositol and<br>the remaining 30% being composed of<br>glycolipids, phosphatidic acids,<br>lysophospholipids (such as lysolecithin)<br>sugar and small amount of oil) |
| Phospholipon[R]55 | (55% of phosphatidyl choline,<br>25% of phosphatidyl ethanolamine,<br>2% of phosphatidyl inositol and the<br>remaining 18% being composed of<br>glycolipids, phosphatidic acids,<br>lysophospholipids (such as lysolecithin)<br>sugar and small amount of oil) |
| Phospholipon[R]80 | (80% of phosphatidyl choline,<br>10% of phosphatidyl ethanolamine,<br>2,5% of lysophosphatidyl choline<br>(lysolecithin) and the remaining<br>7,5% being composed of other, naturally<br>occuring phospholipids such as lysophosphatidyl<br>ethanolamine, phosphatidyl inositol) |
| Phospholipon[R]100 | (96% of phosphatidyl choline,<br>≤3% of lysophosphatidyl choline (lysolecithin)<br>≤1% soybean oil); |
| Phospholipon[R]100H | (96% of hydrogenated phosphatidyl choline,<br>≤3% of lysophosphatidyl choline (lysolecithin)<br>≤1% soybean oil) |

Phospholipon[R]38 (38% of phosphatidyl choline,
16% of N-acetyl phosphatidyl ethanolamine and
4% of phosphatidyl ethanolamine).

It is particularly preferred to use natural phosphatidyl cholines which may be produced by the processes described in the following Patents: DE—PS No. 1,047,597, DE—PS No. 1,053,299, DE—PS No. 1,617,679, DE—PS No. 1,617,680, German Patent Application DE—OS Nos. 30 47 048, 30 47 012 and 30 47 011.

In these processes, for instance soybeans are extracted with a lower aliphatic alcohol, in particular with 94 to 96% ethanol, which is filtered. The clear solution may be evaporated and is redissolved in a lower aliphatic alcohol which may contain 20% water. This solution is subjected to column chromatography on silicic acid gel at an elevated temperature which is 60 to 90°C if highly concentrated phosphatidyl choline is desired and which is elevated to temperatures below 60°C, if a product is desired which is to contain varying amounts of phosphatidyl ethanolamine. In the latter case the soybean material is at first de-oiled by known processes, for instance in an acetone solution with subsequent extraction in ethanol or by chromatographic purification over aluminium oxide in ethanol (DE—PS 1 047 517, 1 053 299, 1 617 679 or 1 617 680).

Suitable N-acyl phosphatidyl ethanolamines are in particular those in which the acyl group emanates from saturated or olefinically unsaturated fatty acids containing from 2 to 20 carbon atoms, particularly from saturated fatty acids containing from 2 to 5 carbon atoms or from saturated or mono-olefinically unsaturated fatty acids containing 14, 16, 18 or 20 carbon atoms.

The acaricide used may be virtually any acaricide, for example the known chemical acaricides from the following groups:

1. Compounds corresponding to the following general formula

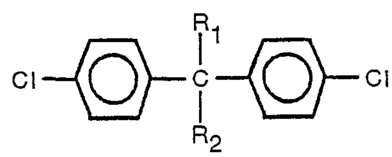

(I)

in which

$R_1$ represents OH, $CH_3$, alkoxy, alkoxymethyl, and

$R_2$ represents $CH_3$, $CF_3$, $CH_2Cl$, $CHCl_2$, $CCl_3$, OH.

Examples of compounds corresponding to formula I are 1,1-bis-(4-chlorophenyl)-ethanol (chlorfenethol), 1,1-bis-(4-chlorophenyl)-2,2-dichloroethanol, 1,1-bis-(4-chlorophenyl)-2-chloroethanol, 1,1-bis-(4-chlorophenyl)-2,2,2-trichloroethanol (dicofol), 1,1-bis-(4-chlorophenyl)-2-ethoxyethanol.

2. Compounds corresponding to the following general formula

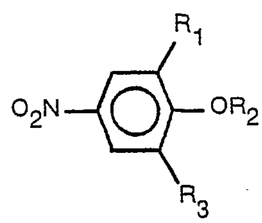

(II)

in which

$R_1$ represents $NO_2$, linear or branched alkyl,

$R_2$ represents H, alkenylcarbonyl, alkoxycarbonyl and

$R_3$ represents cycloalkyl, branched alkyl having up to 8 carbon atoms, except where $R_1$ is $NO_2$, $R_2$ is 2,4-alkenylcarbonyl or branched alkoxycarbonyl and, at the same time $R_3$ is branched alkyl having up to 8 carbon atoms.

The compounds of formula II are known acaricides, such as 4,6-dinitro-2-cyclohexylphenol, 4,6-dinitro-2-cyclohexylphenol salts, 4-nitro-2,6-di-tert.-butylphenol, ethyl (4,6-dinitro-2-tert.-butylphenyl)carbonate.

3. Compounds corresponding to the following general formula

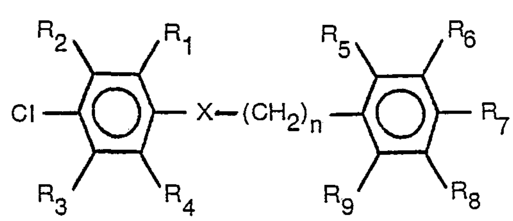

(III)

in which

X = S, SO or $SO_2$, n = 0 or 1 and

$R_1$ to $R_9$ = H, $NO_2$, halogen, particularly Cl or F ($R_1$—$R_9$ may be the same or different).

The compounds corresponding to formula III are known acaricides, such as 2,4,5,4'-tetrachlorodiphenyl sulfide (tetrasul), 4-chlorodiphenyl sulfone, 2,4,5,4'-tetrachlorodiphenyl sulfone (tetradifon), (4-chlorophenyl)-(4-chlorobenzyl)-sulfide (chlorbenside), (4-fluorophenyl)-(4-chlorobenzyl)-sulfide (fluorobensid).

Other known acaricides which may be used include, the following preparations: quinoxaline-2,3-trithiocyclocarbonate (thioquinex), 6-methylquinoxaline-2,3-dithio-cycl.carbonate (chinomethionate), 4-methylthio-3,5-dimethylphenyl N, methylcarbamate (methiocarb), N-(2-methyl-4-chlorophenyl)-N',N'-dimethylformamidine (chlorodimeform), N-(3-methylaminocarbonyloxyphenyl)-N',N'-dimethylformamide (formetanate), 2,4,5-trichlorophenylaza-4-chlorophenylsulfide (chlorfensulfid), 4-chlorophenyl 4-chlorobenzenesulfonate (chlorfenson), diphenyl sulfone.

However, it is preferred to use dinocap, tetrasul, chlorbenside, tetradifon, propargite, chlorfenethol, dicofol, chlorodimeform, formetanate, chinomethioate or thioquinex.

The individual acaricides may be used on their own or in combination with other acaricides or possibly even insecticides after the addition of phospholipids.

The new acaricide/phospholipid compositions may be used for example in the growing of fruit and vegetables, in horticulture, in viniculture and in hop fields, for example for controlling arachnids, such as Tetranychus urticae, Tetranychus telarius, Panonychus ulmi, Panonychus citri, or the various Bryobia species of "false arachnids", for example the various Brevipalpus species of soft-skinned mites, such as Hemitarsonemus catus, Tarsonemus pallidus, or of gall mites, such as for example Phyllocoptruta oleivora and numerous species from the geni Eriophyes, Phyllocoptes, Aceria and Vasates.

The new acaricidal compositions may be prepared as follows:

The phospholipid or phospholipids is/are dissolved in organic solvents such as, for example, toluene, xylene, ethyl acetate, ethanol or methanol or mixtures of these solvents. The choice of the solvent or solvent mixture will depend upon the solubility of the acaricide used. The acaricide or the commercial product containing the acaricide is then dissolved in the phospholipid solution by heating. On completion of dissolution, the solvent is removed *in vacuo* while heating. The product thus obtained is converted into a suitable standard formulation by the addition of suitable auxiliaries such as, for example, fillers, vehicles, diluents, wetting agents, stabilisers, gelating agents, evaporation accelerators and extenders.

The new acaricide compositions may also be prepared by mixing the acaricide or the commercial product containing the acaricide with the phospholipd(s) and any fillers and auxiliaries which may be necessary, dissolving or suspending the resulting mixture in an organic solvent and then removing the solvent. The mixture obtained is ready for use.

In the case of acaricides which are soluble in water or in water/alcohol mixtures, the acaricide is with advantage first dissolved in water or in a water/alcohol mixture and the phospholipid or phospholipid mixtures processed to form a solution or emulsion by stirring or by the application of ultrasonic waves. The emulsifiers normally required may be added before or after this stirring operation. The emulsion or solution thus obtained is freed from the solvent mixture or water in the usual way, for example by distillation, spray-drying or freeze-drying. The resulting product may be used as such or after the addition of suitable auxiliaries. The product may even be re-emulsified or re-dissolved in water and used as a spray preparation.

Examples of vehicles are talcum, kaolin, bentonite, kieselguhr, lime or crushed rock. Other auxiliaries are, for example, surface-active compounds, such as soaps (fatty acid salts), fatty alcohol sulfonates. Gelatin, casein, albumin, starch or methyl cellulose may be used as stabilisers or protective colloids.

The new acaricidal compositions may be used in liquid or solid form, for example as dusting powders, granulates, sprays, aerosols, emulsions or solutions.

In the following comparison tests (Examples 4 and 5), the commercial products containing the active substance referred to by its generic name were used as the acaricide.

## Example 1

Preparation of 1 kg of a spraying power (12.5%) containing formetanate as its active ingredient:

125 g of formetanate, 150 g of Phospholipon$^R$100 in 50 ml of ethanol and 1 g of DONSS (Dioctyl sodium sulfosuccinate are dissolved in 400 ml of heated methanol. The resulting solution is homogeneously kneaded with 721 g of bentonite (colloidal) and the paste obtained is dried. The product is then ground in the presence of 3 g of Aerosil.

1 kg of this spraying power (12.5%) is as effective against arachnids in horticulture as 1 kg of a standard commercial product containing 25% of formetanate.

## Example 2

Preparation of 1 litre of an emulsion concentrate (250 g/l) containing chlorodimeform as its active ingredient:

250 g of chlorodimeform, 250 g of Phospholipon$^R$80 in 100 ml of ethanol, 10 g of Marlowet IHF and 100 ml of xylene are made up to 1 litre with Shellsol N and dissolved.

1 litre of this emulsion concentrate (chlorodimeform content 250 g/l) is as effective against arachnids and as ovicidal insecticide in fruit growing as 1 litre of a standard commercial product containintg 500 g/l of chlorodimeform.

Example 3

Preparation of 1 litre of an emulsion concentrate (12.5%) containing tetradifon as its active ingredient:

125 g of tetradifon, 200 g of Phospholipon[R]55 in 100 ml of ethanol, 8 g of Tween 80 and 2 g of Span 80 are made up to 1 litre with cyclohexanone and dissolved.

1 litre of this emulsion concentrate containing 125 g/l of tetradifon is as effective against summer eggs and young larvae in fruit and vegetable growing and in viniculture as 1 litre of a standard commercial product containing 250 g/litre of tetradifon.

Example 4

Comparison test dicofol

To control arachnids, ornamental plants are sprayed with various mixtures and the percentage destruction of arachnids determined.

| Test No. | Mixture | | Arachnids destroyed in % |
|---|---|---|---|
| 1 | dicofol | 0.15% | 100 |
| 2 | dicofol | 0.075% | 40 |
| 3 | dicofol<br>+ phosphatidyl choline | 0.075%<br>90 mg/l | 100 |
| 4 | phoshatidyl choline | 90 mg/l | 10 |

Example 5

Comparison test with dienochlor

To control arachnids, ornamental plants were sprayed with various mixtures and the percentage destruction of arachnids determined.

| Test No. | Mixture | | Arachnids destroyed in % |
|---|---|---|---|
| 1 | dienochlor* | 0.1% | 100 |
| 2 | dienochlor* | 0.05% | 30 |
| 3 | dienochlor* | 0.025% | 15 |
| 4 | dienochlor*<br>+ phosphatidyl choline | 0.05%<br>90 ml/l | 100 |
| 5 | dienochlor*<br>+ phosphatidyl choline | 0.025%<br>90 mg/l | 70 |
| 6 | phosphatidyl choline | 90 mg/l | 0 |

* Commercial product dienochlor = bis-(pentachloro-2,4-cyclopentadien-1-yl)

It is acknowledged that designations: Aerosil, Marlowet IHF, Tween 80 and Span 80 represent registered Trade Marks of third parties.

**Claims**

1. Phosphatide containing acaricidal composition, characterized in that it consists of

a) one or more acaricidally active substances and

b) one or more de-oiled natural phospholipid products soluble in ethanol consisting of 25 to 96% of phosphatidyl choline or 96% of hydrogenated phosphatidyl choline and 25 to 0% of phosphatidyl

ethanolamine, 20 to 0% of phosphatidyl inositol and the difference to 100% of one or several of N-acyl phosphatidyl ethanolamines, phosphatidyl serine, phosphatidyl glycerol and lysolecithin in a ratio by weight of a:b from 1:0.5 to 1:10 in addition to standard vehicles, diluents, solvents, propellents and/or other inert auxiliaries.

2. An acaricidal composition as claimed in Claim 1, characterised in that constituents a) and b) are present in a ratio by weight of from 1:1 to 1:5.

3. An acaricidal composition as claimed in Claims 1 or 2, characterised in that phosphatidyl choline is used as the phospholipid.

4. An acaricidal composition as claimed in one or more of Claims 1 to 3, characterised in that one or more compounds from the following group is/are used as the acaricidally active substance:

(1) Compounds corresponding to the following general formula

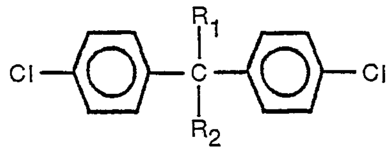

(I)

in which

$R_1$ represents OH, $CH_3$, alkoxy, alkoxymethyl, and

$R_2$ represents $CH_3$, $CF_3$, $CH_2Cl$, $CHCl_2$, $CCl_3$ or OH.

(2) Compounds corresponding to the following general formula

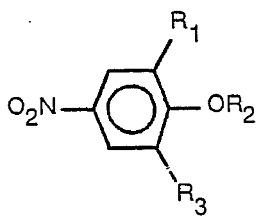

(II)

in which

$R_1$ represents $NO_2$, linear or branched alkyl,

$R_2$ represents H, alkenylcarbonyl, alkoxycarbonyl and

$R_3$ represents cycloalkyl or branched alkyl having up to 8 carbon atoms, except where $R_1$ is $NO_2$, $R_2$ is $C_2$—$C_4$ alkenylcarbonyl or branched alkoxycarbonyl and, at the same time, $R_3$ is branched alkyl having up-to 8 carbon atoms.

(3) Compounds corresponding to the following general formula

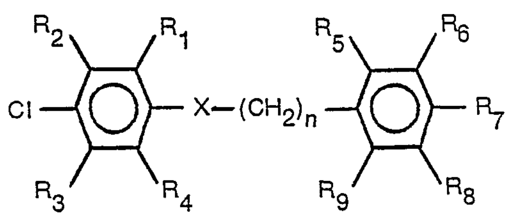

(III)

in which

X represents S, SO or $SO_2$,

n = 0 or 1 and

$R_1$ to $R_9$ may be the same or different and represent H, $NO_2$ or halogen.

(4) The acaricides: quinoxaline-2,3-trithiocyclocarbonate (thioquinex), 6-methylquinoxaline-2,3-dithiocycl.carbonate (chinomethionate), 4-methylthio-3,5-dimethylphenyl N-methylcarbamate (methiocarb), N-(2-methyl-4-chlorophenyl)-N',N'-dimethylformamidine (chlorodimeform), N-(3-methylaminocarbonyloxyphenyl)-N',N'-dimethylformamide (formetanate), 2,4,5-trichlorophenylaza 4-chlorophenyl sulfide (chlorfensulfid), 4-chlorophenyl 4, chlorobenzene-sulfonate (chlorfenson).

5. Acaricidal compositions as claimed in Claim 4, characterised in that they contain as acaricidally active substance one or more of the compounds ethyl (4,6-dinitro-2-tert.-butylphenyl) carbonate, 2,4,5,4'-tetrachlorodiphenyl sulfide (tetrasul), diphenyl sulfone, 4-chlorodiphenyl sulfone, 2,4,5,4'-tetrachlorodiphenyl sulfone (tetradifon), (4-chlorophenyl) (4-chlorobenzyl) sulfide (chlorbenside), 1,1-bis-(4-chlorophenyl)-ethanol (chlorfenethol), 1,1-bis-(4-chlorophenyl)-2,2,2-trichloroethanol (dicofol) or 2-(4-tert.butylphenoxy)-cyclohexyl-prop-2-ynyl sulphite (propargite), chlordimeform, formetanate, chinomethionate or thioquinex.

6. The use of the preparations claimed in one or more of Claims 1 to 5 for controlling mites and arachnids.

7. A process for producing the acaricidal compositions claimed in one or more of Claims 1 to 5,

characterised in that the phospholipid is dissolved in an organic solvent or solvent mixture and the acaricide is dissolved in the resulting solution, optionally by heating and/or stirring, after which the solvent or solvent mixture is removed *in vacuo* and the mixture obtained is converted into a standard formulation after the addition of standard fillers and auxiliaries.

8. A process for producing the acaricidal compositions claimed in one or more of Claims 1 to 5, characterised in that the acaricide(s) is dissolved or suspended in an organic solvent with one or more phospholipids and optionally together with standard fillers and auxiliaries, after which the solvent is distilled off.

9. A process for producing the acaricidal compositions claimed in one or more of Claims 1 to 5, characterised in that one or more water-soluble or alcohol-soluble acaricides is/are dissolved in water or water/alcohol mixtures together with one or more phospholipids by stirring and/or gentle heating and/or by the application of ultrasonic waves, after which the solvent or solvent mixture is removed.

**Patentansprüche**

1. Phosphatidhaltige Acarizid-Zusammensetzung, dadurch gekennzeichnet, daß sie aus

a) einem oder mehreren Acarizid-Wirkstoffen und

b) einem oder mehreren entölten natürlichen, ethanollöslichen Phospholipid-Produkten bestehend aus
25 bis 96% Phosphatidylcholin oder 96% hydriertes
Phosphatidylcholin und
20 bis 0% Phosphatidylethanolamin,
20 bis 0% Phosphatidylinosit

und der Differenz bis 100% aus einer oder mehreren Verbindungen aus der Gruppe der N-Acylphosphatidylethanolamine, Phosphatidylserin, Phosphatidylglycerol und Lysolecithin im Gewichtsverhältnis a:b von 1:0,5 bis 1:10 neben üblichen Träger-, Verdünnungs-, Lösungs-, Versprühungs- und/oder anderen inerten Hilfsmitteln besteht.

2. Acarizid-Zusammensetzung gemäß Anspruch 1, dadurch gekennzeichnet, daß die Bestandteile a) und b) im Gewichtsverhältnis 1:1 bis 1:5 vorliegen.

3. Acarizid-Zusammensetzung gemäß einem oder mehreren der Ansprüche 1 oder 2, dadurch gekennzeichnet, daß als Phospholipid Phosphatidylcholin eingesetzt wird.

4. Acarizid-Zusammensetzung gemäß einem oder mehreren der Ansprüche 1 bis 3, dadurch gekennzeichnet, daß als Akarizid-Wirkstoff eine oder mehrere Verbindungen aus der Gruppe eingesetzt wird:

(1) Die Verbindungen der allgemeinen Formel I

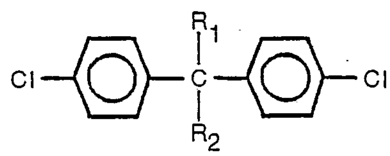

(I)

in der

$R_1$ = OH, $CH_3$, Alkoxy, Alkoxymethyl und

$R_2$ = $CH_3$, $CF_3$, $CH_2Cl$, $CHCl_2$, $CCl_3$ oder OH ist;

(2) die Verbindungen der allgemeinen Formel II

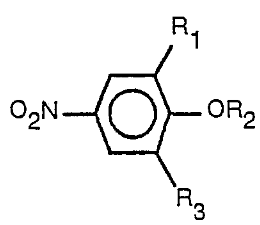

(II)

in der

$R_1$ = $NO_2$, geradkettiges oder verzweigtes Alkyl,

$R_2$ = H, Alkenylcarbonyl oder Alkoxycarbonyl und

$R_3$ = Cycloalkyl oder verzweigtes Alkyl mit bis zu 8 Kohlenstoffatomen ist;

ausgenommen wo

$R_1$ = $NO_2$,

$R_2$ = $C_2$—$C_4$-Alkenylcarbonyl oder verzweigtes Alkoxycarbonyl und gleichzeitig

$R_3$ = verzweigtes Alkyl mit bis zu 8 Kohlenstoffatomen;

(3) die Verbindungen der allgemeinen Formel III

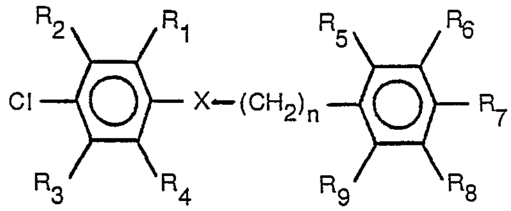

(III)

in der

X = S, SO oder $SO_2$,

n = 0 oder 1 under

$R_1$ bis $R_9$, die gleich oder verschieden voneinander sein können, H, $NO_2$ oder Halogen sind;

(4) die Acarizide:

Chinoxalin-2,3-trithiocyclocarbonat (Thioquinox), 6-Methyl-chinoxalin-2,3-dithiocyclocarbonat (Chinomethionat), 4-Methylthio-3,5-dimethylphenyl-N-methylcarbamat (Methiocarb), N-(2-Methyl-4-chlorophenyl)-N',N'-dimethylformamidin (Chlordimeform), N-(3-Methylaminocarbonyloxyphenyl-N',N'-dimethylformamid (Formetanat), 2,4,5-Trichlorphenylaza-4-chlorphenylsulfid (Chlorfensulfid), 4-Chlorbenzolsulfonsäure (Chlorfenson).

5. Acarzizid-Zusammensetzung gemäß Anspruch 4, dadurch gekennzeichnet, daß als Akarizid-Wirkstoff eine oder mehrere Verbindungen aus der Gruppe eingesetzt wird: Äthyl-(4,6-dinitro-2-tert. butylphenyl)-carbonat, 2,4,5,4'-Tetrachlordiphenylsulfid (Tetrasul), Diphenylsulfon, 4-Chlordiphenylsulfon, 2,4,5,4'-Tetrachlordiphenylsulfon (Tetradifon), (4-Chlorphenyl)-(4-chlorbenzyl)-sulfid (Chlorbensid), 1,1-Bis-(4-chlorphenyl)-äthanol (Chlorfenethol), 1,1-Bis-(4-chlorphenyl)-2,2,2-trichlorethanol (Dicofol) oder 2-(4-tert. Butylphenoxy)-cyclohexyl-prop-2-inyl sulphid (Propargit).

6. Verwendung der Zubereitungen gemäß einem oder mehreren der Ansprüche 1 bis 5 zur Bekämpfung von Milben bzw. Spinnmilben.

7. Verfahren zur Herstellung von Acarizid-Zusammensetzungen gemäß einem oder mehreren der Ansprüche 1 bis 5, dadurch gekennzeichnet, daß das Phospholipid in einem organischen Lösungsmittel bzw. Lösungsmittelgemisch gelöst wird und in diese Lösung ggfs. durch Erwärmen und/oder Rühren das Acarizid gelöst und anschließend das Lösungsmittel oder Lösungsmittelgemisch im Vakuum abgezogen wird und die erhaltene Mischung unter Zusatz üblicher Füll- und Hilfsmittel in eine übliche Anwendungsform überführt wird.

8. Verfahren zur Herstellung von Acarizid-Zusammensetzungen gemäß einem oder mehreren der Ansprüche 1 bis 5, dadurch gekennzeichnet, daß das oder die Acarizide mit einem oder mehreren Phospholipiden ggfs. unter Zusatz üblicher Füll- und Hilfsmittel in einem organischen Lösungsmittel gelöst bzw. aufgeschlämmt und das Lösungsmittel danach abgezogen wird.

9. Verfahren zur Herstellung von Acarizid-Zusammensetzungen gemäß einem oder mehreren der Ansprüche 1 bis 5, dadurch gekennzeichnet, daß ein oder mehrere, in Wasser oder Alkohol lösliche Acarizide in Wasser oder Wasser-Alkohol-Mischungen zusammen mit einem oder mehreren Phospolipiden unter Rühren und/oder leichter Erwärmung, und/oder Ultraschall gelöst und das Lösungsmittel bzw. Lösungsmittelgemisch abgezogen wird.

**Revendications**

1. Composition acaricide contenant un phosphatide, caractérisée en ce qu'elle comprend

a) une ou plusieurs substances actives en tant qu'acaridides et

b) un ou plusieurs produits phosphatidyliques naturels déshuilés solubles dans l'éthanol constitués par

25 à 96% de phosphatidylcholine ou 96% de phosphatidylcholine hydrogénée et

25 à 0% de phosphatidyléthanolamine,

20 à 0% de phosphatidylinositol

et la différence à 100% d'un ou plusieurs parmi les N-acylphosphatidyléthanolamines, la phosphatidylsérine, le phosphatidylglycérol et la lysolécithine en proportion pondérale a:b de 1:0,5 à 1:10 en plus de véhicules, de diluants, de solvants, de propellents et/ou d'autres adjuvants inertes standard.

2. Composition acaricide selon la revendication 1, caractérisée en ce que les constituants a) et b) sont présents en proportion pondérale de 1:1 à 1:5.

3. Composition acaricide selon les revendications 1 ou 2, caractérisée en ce que l'on emploie comme phospholipid la phosphatidylcholine.

4. Composition acaricide selon l'une ou plusieurs des revendications 1 à 3, caractérisée en ce que l'on emploie comme substance active en tant qu'acaricide un ou plusieurs des composés du groupe suivant:

(1) Composés correspondant à la formule générale

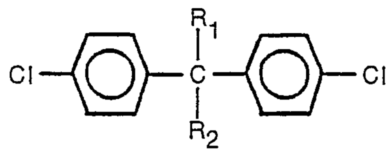

(I)

dans laquelle

$R_1$ représente un groupe OH, $CH_3$, alcoxy, alcoxyméthyle, et

$R_2$ représente un groupe $CH_3$, $CF_3$, $CH_2Cl$, $CHCl_2$, $CCl_3$ ou OH.

(2) Composés correspondant à la formule générale

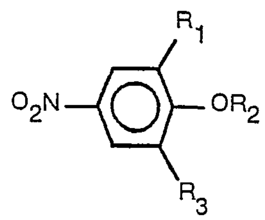

(II)

dans laquelle

$R_1$ représente $NO_2$, un groupe alkyle linéaire ou ramifié

$R_2$ représente H, un groupe alcénylcarbonyle, ou alcoxycarbonyle et

$R_3$ représente un groupe cycloalkyle ou alkyle ramifié ayant jusqu'à 8 atomes de carbone, excepté quand $R_1$ est $NO_2$, $R_2$ est un groupe (alcényl en $C_{2-4}$)carbonyle ou alcoxycarbonyle ramifié et, en même temps, $R_3$ est un groupe alkyle ramifié ayant jusqu'à 8 atomes de carbone.

(3) Composés correspondant à la formule générale

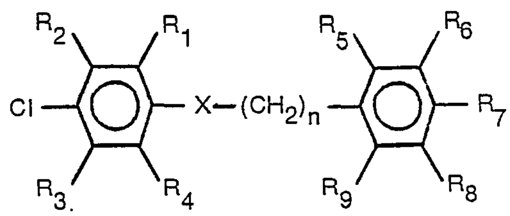

(III)

dans laquelle

X représente S, SO ou $SO_2$, n = 0 ou 1 et

$R_1$ à $R_9$ peuvent être identiques ou différents et représentent H, $NO_2$ ou un halogène.

(4) Les acaricides: quinoxaline-2,3-trithiocyclocarbonate (thioquinex), 6-méthylquinoxaline-2,3-dithiocyclocarbonate (chinomethionate), 4-méthylthio-3,5-diméthylphényl-N-méthylcarbamate (méthiocarb), N-(2-méthyl-4-chlorophényl)-N,N'-diméthylformamidine (chlorodiméform), N-(3-méthylaminocarbonyloxyphényl)-N,N'-diméthylformamide (formétanate), 2,4,5-trichlorophénylaza-4-chlorophénylsulfure (chlorfensulfid), 4-chlorobenzènesulfonate de 4-chlorophényle (chlorfenson).

5. Compositions acaricides selon la revendication 4, caractérisées en ce qu'elles contiennent comme substance active en tant qu'acaricide un ou plusieurs des composés (4,6-dinitro-2-t-butylphényl)carbonate d'éthyle, sulfure de 2,4,5,4'-tétrachlorodiphényle (tétrasul), diphénylsulfone, 4-chlorodiphénylsulfone, 2,4,5,4'-tétrachlorodiphénylsulfone (tétradifon), (4-chlorophényl)-(4-chlorobenzyl) sulfure (chlorbenside), 1,1-bis-(4-chlorophényl)-éthanol (chlorfénéthol), 1,1-bis-(4-chlorophényl)-2,2,2-trichloroéthanol (dicofol) ou sulfite de 2-(4-t-butylphénoxy)-cyclohexylpropynyle-2, chlorodiméform, formétanate, chinométhionate ou thioquinex.

6. L'utilisation des préparations selon l'une ou plusieurs des revendications 1 à 5, pour maîtriser les acariens et les arachnides.

7. Un procédé de production des compositions acaricides selon l'une ou plusieurs des revendications 1 à 5, caractérisé en ce que l'on dissout le phospholipid dans un solvant ou mélange de solvants organique et que l'on dissout l'acaricide dans la solution résultante, éventuellement par chauffage et/ou sous agitation, après quoi on élimine le solvant ou mélange de solvants sous vide et on transforme le mélange obtenu en une formulation standard après l'addition de charges et adjuvants standard.

8. Un procédé de production des compositions acaricides selon l'une ou plusieurs des revendications 1 à 5, caractérisé en ce que l'on dissout ou que l'on met en suspension l'acaricide (les acaricides) dans un solvant organique avec un ou plusieurs phospholipid(s) et éventuellement avec des charges et des adjuvants standard, après quoi on élimine le solvant par distillation.

9. Un procédé de production des compositions acaricides selon l'une ou plusieurs des revendications 1 à 5, caractérisé en ce que l'on dissout un ou plusieurs acaricide(s) hydrosoluble(s) ou soluble(s) dans l'alcool dans l'eau ou dans des mélanges eau/alcool avec un ou plusieurs phospholipid(s) sous agitation et/ou par chauffage ménagé et/ou en appliquant des ondes ultrasonores, après quoi on élimine le solvant ou mélange de solvants.